# FASCICULE DE BREVET EUROPEEN

(11) **EP 0 577 533 B1**
(45) Date de publication et mention de la délivrance du brevet: **08.05.1996**
(21) Numéro de dépôt: 93420280.5
(22) Date de dépôt: 28.06.1993
(51) Int. Cl.: C01G 43/06

(54) **Procédé d'électro-fluoration sélective d'alliages ou de mélanges métalliques à base d'uranium**
Verfahren zur selektiven Elektrofluorierung von Legierungen oder von metallischen Mischungen auf der Basis von Uran
Process for the selective electrofluoration of alloys or of metallic mixtures containing uranium

(30) Priorité: 29.06.1992 FR 9208333
(43) Date de publication de la demande: 05.01.1994
(73) Titulaire: COGEMA COMPAGNIE GENERALE DES MATIERES NUCLEAIRES, F-78141 Velizy-Villacoublay (FR)
(72) Inventeur: Bertaud, Yves, F-38500 Voiron (FR); Bouvet, Sylvie, F-38470 Vinay (FR); Lamaze, Airy-Pierre, F-38000 Grenoble (FR)
(74) Mandataire: Dubois-Chabert, Guy

(56) Documents cités:
- DE-A- 2 040 426
- FR-A- 1 272 542
- FR-A- 2 096 438

## Description

### DOMAINE TECHNIQUE

La présente invention concerne un procédé d'électro-fluoration sélective d'alliages ou de mélanges métalliques contenant de l'uranium de façon à pouvoir récupérer directement et séparément les différents composants sous forme de fluorure, et en particulier l'uranium sous forme d'hexafluorure gazeux.

### ETAT DE LA TECHNIQUE

Il est intéressant de pouvoir séparer les différents composants de débris, d' alliages ou de mélanges métalliques à base d'uranium, en particulier pour pouvoir récupérer l'uranium contenu et son potentiel en U235 sous la forme la plus pure possible.

Dans la suite, le terme "alliage" incluera tous mélanges métalliques sous quelque forme que ce soit.

A cette fin, la demanderesse a déjà mis au point dans la demande de brevet FR 92-01730, un procédé de fluoration d'alliage à base d'U par réaction du fluor et/ou de l'acide fluorhydrique pour obtenir "in fine" un mélange de fluorures gazeux, contenant en particulier UF₆, qu'il est nécessaire de distiller pour séparer les différents composants et obtenir UF₆ pur dont le potentiel en U235 peut ainsi être réutilisé dans les réacteurs nucléaires.

Bien que ce procédé permette de récupérer l'uranium pur dans de très bonnes conditions, le transport et la manipulation du fluor gazeux présente cependant des risques qu'il est intéressant de pouvoir éviter. Par ailleurs, la distillation de quantités importantes de fluorures gazeux peut nécessiter des installations et une conduite délicate des opérations quand la proportion d'éléments alliés autres que l'uranium est importante.

C'est pourquoi la demanderesse a cherché à mettre au point un procédé de fluoration sélective des divers composants de l'alliage qui permette d'éviter à la fois la maniupulation de fluor gazeux et de simplifier les opérations de distillation, en limitant les volumes à traiter, destinées à obtenir les composants purs, voire de supprimer lesdites opérations.

### DESCRIPTION DE L'INVENTION

L'invention est un procédé de fluoration sélective d'alliage ou mélange métallique à base d'uranium caractérisé en ce qu'on opère une réaction anodique sélective sur au moins un des composants de l'alliage à l'aide d'une tension anodique contrôlée appliquée à l'alliage et dans un bain de fluorures fondus.

Ainsi, il s'agit d'une réaction d'oxyfluoration anodique qui consiste essentiellement à fluorer anodiquement et sélectivement les composants de l'alliage en commençant par le plus électropositif. Ce procédé est particulièrement adapté à la récupération de l'uranium dans les alliages, grâce au fait qu'il est généralement le métal le plus électropositif de l'alliage; ainsi on récupère généralement d'abord l'uranium sous forme UF₆, les autres métaux pouvant ensuite être fluorés séparément les uns après les autres pour être récupérés selon le procédé de l'invention, ou bien être évacués si leur récupération ne présente pas d'intérêt.

Pour parfaire la pureté de l'UF₆ obtenu, ou des autres composants de l'alliage donnant des fluorures volatils, on peut effectuer une distillation complémentaire des gaz anodiques et/ou du bain d'électrolyse.

L'alliage auquel est appliquée la tension anodique est généralement employé sous forme fragmentée et pour cela il est préférable de le contenir dans un panier constitué d'un matériau résistant au bain fluoré dans les conditions de tension de la réaction anodique, il peut être en particulier à base de carbone, ou de monel ou encore de certains plastiques isolants comme les polyfluoroéthylènes (téflon) ou d'autres plastiques perfluorés. Le carbone, ou les fibres de carbone, renforcés par des composites, qui peuvent se passiver rapidement en présence du fluor et des sels d'uranium, constituent des matériaux avantageux.

Pour mieux contrôler la réaction, il est avantageux que le panier soit légèrement polarisé cathodiquement par rapport à l'alliage à traiter, mais bien sûr toujours anodiquement par rapport à la cathode; pour cela on utilise un panier métallique (par exemple monel) recouvert intérieurement de plastique pour l'isoler de l'alliage et pouvoir maintenir son potentiel à la valeur choisie.

L'électrolyte est exclusivement à base de fluorures fondus; il est préférable que les cations soient tels qu'après réduction desdits fluorures, ils conduisent à un élément peu ou pas soluble dans le bain ou ne réagissant pas avec lui ou avec les composés anodiques obtenus.

A cet égard, il est avantageux qu'en tant que fluorure l'électrolyte contienne de l'acide fluorhydrique à titre de matière consommable ajoutée régulièrement: son cation une fois réduit ne réagit pas avec le bain. Ainsi, on peut utiliser des bains du type KF-HF contenant par exemple 38 à 45% (poids) de HF fondant entre 80 et 120°C, tel que le bain KF-2HF fondant vers 100°C, ou bien des bains du type NH₄F-HF contenant par exemple 45 à 75% (poids) de HF fondant entre 55 et 80°C, tel que le bain NH₄F-3HF fondant vers 60°C.
Dans ce cas, de l'hydrogène est généré à la cathode et est évacué.

La température du bain d'électrolyse est telle que les fluorures métalliques générés (dont au moins UF₆) soient gazeux et facilement récupérables.

De même, il est avantageux que la tension de vapeur de l'électrolyte soit suffisamment basse pour éviter une pollution du fluorure métallique récolté.

La charge d'alliage à traiter est portée à un potentiel anodique tel que l'on fluore d'abord la totalité du métal le plus électropositif de l'alliage, généralement l'uranium, comme cela a été déjà dit.

La valeur de cette tension anodique peut se situer dans de larges limites : elle est fonction non seulement du métal à fluorer, mais également du bain d'électrolyse, des amenées de courant, de la constitution de la charge, du panier, des diaphragmes, plus généralement de l'ensemble du dispositif d'électrolyse utilisé.

On cherche à maintenir cette tension approximativement constante bien qu'on soit amené en général à l'ajuster pour tenir compte des évolutions chimiques ou autres se produisant en cours de réaction dans la cellule d'électrolyse et pour maintenir une production de fluorure gazeux suffisante; mais il faut alors prendre garde, pour conserver la sélectivité du procédé, de ne pas la situer à un niveau tel que la fluoration d'un autre composant de l'alliage se produise.

Après avoir fluoré complètement un premier composant métallique de l'alliage, on peut augmenter la tension anodique de façon à fluorer sélectivement un deuxième composant de l'alliage et ainsi de suite par paliers successifs. Mais on peut aussi évacuer les métaux résiduels s'il n'est pas intéressant de les traiter par cette méthode ou s'ils donnent des fluorures non volatils.

Il est difficile de déterminer la densité du courant surfacique anodique utilisée au cours du procédé, compte tenu que l'alliage se trouve sous forme fragmentée. Cependant la demanderesse a constaté qu'il était préférable de travailler avec une faible intensité de façon à améliorer la sélectivité de la fluoration et que le paramètre critique était la densité d'énergie dissipée par rapport au volume du bain d'électrolyse.

Ainsi, on peut utiliser des densités comprises entre 1 et 30 A/l d'électrolyte, avec des densités cathodiques de 0,1 à 0,5 A/cm², les densités anodiques surfaciques locales étant alors de l'ordre de 0,001 à 0,01 A/cm² selon l'état de division de l'alliage.

Pour amener le courant anodique à la charge métallique à traiter, on fait appel généralement à des matériaux ne se consommant pas ou peu dans les conditions du procédé, ne donnant pas de fluorures volatils et/ou se passivant facilement. Ainsi, la demanderesse a trouvé que le carbone est un matériau de choix car il se passive automatiquement dans les zones éloignées de la charge métallique avec formation probable de fluor naissant.

Quant à la cathode, elle est généralement métallique et constituée d'acier, nickel ou monel, et séparée de la zone anodique par un diaphragme, par exemple du type à persienne, qui empêche la migration du cation réduit dans le compartiment anodique.
La cathode peut aussi être constituée par tout ou partie des parois de la cuve d'électrolyse; dans ce cas, pour éviter un dégagement d'hydrogène sur le fond difficile à canaliser, il est avantageux d'isoler ledit fond par un revêtement spécial non conducteur ou par du bain d'électrolyse figé.

La cuve est généralement constituée d'un caisson cylindrique ou parallélépipédique au centre duquel se trouve le compartiment anodique avec le panier contenant l'alliage à traiter. Il est surmonté d'un dôme anodique permettant de recueillir les fluorures volatils générés, et éventuellement de collecteurs de gaz cathodiques pour récupérer l'hydrogène.

La cuve peut être isolante ou conductrice du courant et être par exemple en acier revêtu, monel, nickel, plastique résistant au bain et à la température de préférence renforcé, etc... Elle est habituellement close par un couvercle supportant le panier anodique avec son amenée de courant et le dôme de récolte des fluorures gazeux, l'alimentation en fluorure (par exemple HF), les connexions électriques, et éventuellement le diaphragme, les cathodes, le collecteur d'hydrogène.
Elle comporte généralement un dispositif (par exemple un serpentin) servant au refroidissement ou réchauffage du bain électrolytique en vue de sa fusion et/ou de son maintien en température.

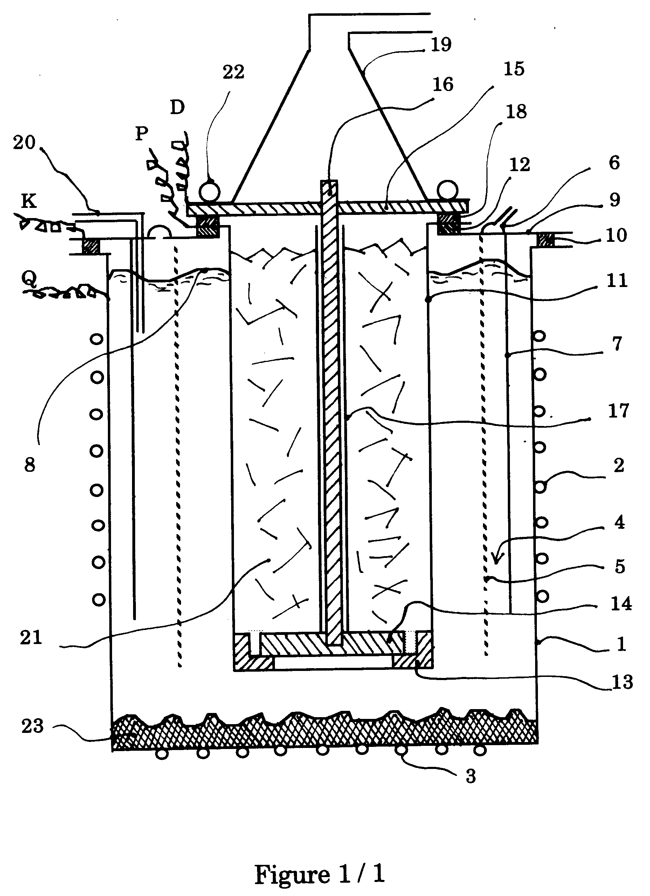

La figure 1/1 représente un exemple d'agencement d'une cellule d'électrolyse adaptée au procédé selon l'invention utilisant un bain contenant HF.

En (1) on voit la cuve, par exemple en monel ou en acier recouvert intérieurement d'un revêtement inerte et résistant au bain et à la température, sur les parois et le fond de laquelle sont fixés respectivement les serpentins (2) et (3) (ou tout autre dispositif de chauffage ou refroidissement équivalent) qui permettent la régulation de la température du bain ou son réchauffage par exemple après un refroidissement ayant entraîné un figeage du bain. Dans le cas présent, le serpentin (3) sert également à obtenir une couche de bain figé (23) pour isoler le fond.

Le compartiment cathodique (4) est séparé du reste de la cellule (compartiment anodique) à l'aide du diaphragme (5) fixé ici au couvercle (9) et comprenant des trous obliques, permettant de confiner l'hydrogène formé qui est ensuite évacué à l'aide du collecteur (6). Il comporte des lames cathodiques (7), par exemple en monel, fixées au couvercle (9) et plongeant dans le bain d'électrolyse dont la surface est représentée en (8).

A travers le couvercle passe un conduit (20) d'alimentation en HF.
Le couvercle est isolé du corps de la cuve par une couronne en téflon (10).
Le panier anodique ajouré (11), qui contient la charge anodique (21), est fixé au couvercle (9) par l'intermédiaire d'une couronne en téflon (12). Il peut être en composite de carbone mais tout aussi bien être en monel recouvert intérieurement d'un isolant plastique, téflon, plastique fluoré... Au fond dudit panier on a disposé une couronne en téflon (13) sur laquelle repose un disque de carbone (14) constituant la partie active inférieure de l'amenée de courant anodique.

Celle-ci comprend donc ce disque inférieur (14) relié à un disque supérieur ajouré (15) (pour l'évacuation du fluorure gazeux produit) par l'intermédiaire d'une tige de carbone composite (16) filetée à ses extrémités et protégée du bain électrolytique par une enveloppe isolante et inerte (17), par exemple en téflon ou en plastique perfluoré... Cette disposition permet de forcer le courant à passer par le disque inférieur (14) de façon à consommer de préférence l'alliage situé en fond de panier et à faire percoler les gaz à travers la charge, l'alimentation de cette zone en alliage à consommer se faisant alors automatiquement par gravité.

Le disque supérieur (15) repose sur une couronne isolante (18) en téflon qui l'isole du panier anodique (11).
En (19) on voit le dôme recouvrant le panier anodique et servant à récolter le fluorure gazeux formé. Il est fixé directement sur le disque supérieur (15) pour assurer un bon contact électrique éventuellement refroidi par le serpentin (22).

Par ailleurs, on voit que le branchement électrique (D) pour amener le courant anodique se fait directement sur le dôme (19), que le branchement K pour l'amenée de courant cathodique se fait directement sur le couvercle (9) en contact avec la cathode (7). La connexion (P) branchée sur le panier anodique sert, le cas échéant, à piloter et/ou à mesurer la tension dudit panier. Enfin, l'amenée de courant (Q) sert à piloter le potentiel de la cuve (1) pour éviter sa corrosion.

D'autres agencements de la cellule peuvent être réalisés notamment avec d'autres types d'amenée de courant par exemple par les parois ou le fond de la cuve.

### EXEMPLES

Les exemples suivants illustrent l'invention.

### Exemple 1

Dans cet exemple on a effectué la fluoration d'un alliage U contenant 10% de Mo.
On a utilisé un dispositif conforme à celui décrit dans la figure 1. Le bain est un mélange KF, 2HF maintenu à 100°C, la cuve (1) est en acier recouvert intérieurement d'une enveloppe en monel. Les lames cathodiques (7) sont en monel et le diaphragme (5), isolant, en téflon (tissus de marque GORE-TEX) perforé de trous obliques.
Le panier anodique (11) est en composite "Aerolor" (marque déposée de la Sté Le Carbone Lorraine), à base de fibres de carbone bidimensionnelles, perforé et contient des morceaux d'alliage de 50 g environ.

L'amenée de courant anodique comporte un disque inférieur (14) et une tige de jonction (16) en graphite, tandis que le disque supérieur (15) ajouré, du type roue de char, est en composite carboné "Aérolor". La gaine isolante (17) autour de la tige (16) est en téflon. Le dôme (19) est en monel.

La cuve et les lames cathodiques ont été reliées ensemble pour être au même potentiel, et la borne P du panier anodique a été laissée libre pour effectuer des mesures.

On a alors fondu le bain par circulation dans les serpentins d'un mélange eau-glycol à 120°C, puis injecté de l'air froid dans le serpentin (3) du fond de cuve pour obtenir un fond recouvert d'une couche de bain figé.

On a alors appliqué entre la borne cathodique (K) et la borne anodique (D) une tension prenant en compte la tension de dissolution sélective de l'uranium, les surtensions et les pertes ohmiques du dispositif, de façon à obtenir une intensité d'environ 50A et à avoir une tension de 1 V entre (P) et (K) (panier anodique et cathode), ce qui permet de mieux contrôler la réaction de dissolution sélective. La densité de courant est alors d'environ 0,25 A/cm² sur les cathodes et est estimée à environ 0,01 A/cm² sur les morceaux d'alliage.

On maintient cette tension approximativement constante en compensant toutefois les pertes ohmiques apparaissant; de même on effectue un apport régulier d'HF de façon à ce que la teneur en HF du bain soit constante.

Les gaz collectés ont été analysés en continu par spectrométrie de masse; on a constaté qu'ils étaient constitués essentiellement d'UF₆ avec des entraînements de HF et MoF₅ ne dépassant pas environ 0,05 %.
Quand l'intensité a chuté de façon significative, il n'a pas été possible d'augmenter la tension, pour maintenir ladite intensité à un niveau acceptable, sans augmenter brutalement la proportion de MoF₅ dans les gaz récoltés.

Ceci montre que tout l'uranium a été dissout. On a alors porté le panier anodique (borne P) au potentiel anodique de la borne (D) pour fluorer des résidus de tétrafluorure UF₄.

Après avoir arrêté l'électrolyse, on a retiré le panier anodique, neutralisé les débris résiduels contenus; leur analyse montre qu'ils ne contiennent pratiquement plus que du molybdène (teneur en U, de 0,01%).

### Exemple 2

Dans cet exemple on a effectué la fluoration sélective d'un mélange de morceaux d'U et de débris d'acier allié.

La cuve (1) en acier utilisée a été recouverte intérieurement de polypropylène fluoré; elle a été chauffée et sa température a été régulée a 60°C à l'aide d'air chaud; le bain est constitué d'un mélange NH₄F-3HF. Les lames cathodiques (7) sont des rubans d'acier, le panier anodique (11) est aussi en polypropylène fluoré; il fait également fonction de diaphragme, pour séparer les compartiments anodique et cathodique, grâce à des trous obliques pratiqués dans sa paroi.

L'amenée de courant est telle que celle décrite dans la figure 1, la gaine isolante (17) étant aussi en polypropylène fluoré. Le dôme (19) est en nickel.

La procédure de dissolution sélective a été conduite de façon analogue à celle de l'Exemple 1.

Compte tenu de ce que le panier anodique n'est pas conducteur, ce qui ne permet pas de contrôler la réaction par le potentiel dudit panier, l'intensité a été limitée à 20A; comme précédemment les gaz collectés ont été analysés en continu.

On a obtenu un UF₆ titrant plus de 99,8%. Sa pureté pourrait être améliorée soit en arrêtant la dissolution plus tôt, soit en distillant le gaz obtenu comme cela a été déjà dit.

Après électrolyse, les résidus métalliques contenus dans le panier anodique ont été traités comme dans l'Exemple 1; ils titrent 0,03% d'U.

On voit que l'invention permet de récupérer pratiquement la totalité de l'U d'un alliage, sous une forme telle qu'il est directement utilisable pour être éventuellement et aisément ajusté, par exemple par dilution gazeuse en ligne, à une teneur isotopique souhaitée, et pour confectionner des combustibles nucléaires, sachant que cet uranium récupéré peut être, préalablement à son utilisation nucléaire, complètement purifié par une distillation facile à conduire. De plus on voit que ce procédé ne génère pas d'effluents parasites, ne consomme pas de réactif et/ou d'énergie pour réagir avec d'autres éléments que le métal à récupérer ou de réactif pour neutraliser des effluents indésirables.

## Revendications

1. Procédé d'électro-fluoration sélective d'alliage ou mélange métallique à base d'uranium caractérisé en ce qu'on opère une réaction anodique sélective sur au moins un des composants de l'alliage à l'aide d'une tension anodique controlée appliquée à l'alliage dans un bain de fluorures fondus.

2. Procédé selon la revendication 1 caractérisé en ce que la fluoration sélective s'applique à l'uranium.

3. Procédé selon l'une quelconque des revendications 1 ou 2 caractérisé en ce que l'alliage est employé sous forme fragmentée.

4. Procédé selon l'une quelconque des revendications 1 à 3 caractérisé en ce que le bain de fluorure fondu contient de l'acide fluorhydrique.

5. Procédé selon la revendication 4 caractérisé en ce que le bain est un bain KF-2HF ou NH₄F-3HF.

6. Procédé selon l'une quelconque des revendications 1 à 4 caractérisé en ce qu'il est effectué dans une cellule d'électrolyse comprenant une cuve (1) munie d'un dispositif (2) permettant d'être réchauffée ou refroidie pour que le bain puisse être fondu, figé et/ou maintenu en température, une cathode métallique (7), un panier anodique (11) contenant la charge d'alliage à traiter (21) et une amenée de courant anodique (14) à la charge, un diaphragme (5) séparant les compartiments anodique et cathodique, un dôme de récupération (19) des fluorures volatils produits au cours de la fluoration sélective, éventuellement un collecteur d'hydrogène (6).

7. Procédé selon la revendication 6 caractérisé en ce que la cuve sert de cathode.

8. Procédé selon l'une quelconque des revendications 6 ou 7 caractérisé en ce que le panier anodique sert de diaphragme.

9. Procédé selon l'une quelconque des revendications 6 à 8 caractérisé en ce que l'amenée de courant anodique amène ledit courant au bas de la charge.

10. Procédé selon l'une quelconque des revendications 6 à 9 caractérisé en ce que la cuve comporte un couvercle (9) supportant le panier anodique (11), le dôme de récupération (19), éventuellement la cathode (7) et le collecteur d'hydrogène (6).

11. Procédé selon l'une quelconque des revendications 6 à 10 caractérisé en ce que la cuve est en acier revêtu, monel, nickel ou plastique, de préférence renforcé.

12. Procédé selon l'une quelconque des revendications 6 à 11, caractérisé en ce que le panier anodique est en monel recouvert intérieurement de plastique, carbone, fibres de carbone, préférentiellement renforcés, ou plastiques, préférentiellement polyfluoréthylène ou plastiques perfluorés.

13. Procédé selon l'une quelconque des revendications 1 à 12 caractérisé en ce que les potentiels de l'alliage, du panier anodique et de la cuve sont pilotés séparément et que de preférence le panier anodique est polarisé cathodiquement par rapport à l'alliage et qu'il est en métal recouvert intérieurement de plastique.

## Claims

1. A process for the selective electrofluorination of alloy or metallic mixture based on uranium characterised by effecting a selective anodic reaction on at least one of the components of the alloy by means of a controlled anodic voltage applied to the alloy in a bath of molten fluorides.

2. A process according to claim 1 characterised in that the selective fluorination operation is applied to uranium.

3. A process according to either one of claims 1 and 2 characterised in that the alloy is used in fragmented form.

4. A process according to any one of claims 1 to 3 characterised in that the bath of molten fluoride contains hydrofluoric acid.

5. A process according to claim 4 characterised in that the bath is a bath KF-2HF or NH₄F-3HF.

6. A process according to any one of claims 1 to 4 characterised in that it is carried out in an electrolysis cell comprising a tank (1) provided with a device (2) permitting heating or cooling so that the bath can be melted, solidified and/or held at a temperature, a metallic cathode (7), an anodic basket (11) containing the charge of alloy to be treated (21) and an anodic current feed (14) to the charge, a diaphragm (5) separating the anodic and cathodic compartments, a dome (19) for recovery of the volatile fluorides produced in the course of the selective fluorination operation, and possibly a hydrogen collector (6).

7. A process according to claim 6 characterised in that the tank serves as a cathode.

8. A process according to either one of claims 6 and 7 characterised in that the anodic basket serves as a diaphragm.

9. A process according to any one of claims 6 to 8 characterised in that the anodic current feed feeds said current to the bottom of the charge.

10. A process according to any one of claims 6 to 9 characterised in that the tank comprises a cover (9) supporting the anodic basket (11), the recovery dome (19), possibly the cathode (7) and the hydrogen collector (6).

11. A process according to any one of claims 6 to 10 characterised in that the tank is of coated steel, Monel metal, nickel or plastics material which is preferably reinforced.

12. A process according to any one of claims 6 to 11 characterised in that the anodic basket is of Monel metal internally covered with plastics material, carbon, carbon fibres which are preferably reinforced, or plastics material, preferably polyfluoroethylene, or perfluorinated plastics materials.

13. A process according to any one of claims 1 to 12 characterised in that the potentials of the alloy, the anodic basket and the tank are pilot-controlled separately and that preferably the anodic basket is cathodically polarised with respect to the alloy and that it is of metal which is internally covered with plastics material.

## Patentansprüche

1. Verfahren zur selektiven Elektrofluorierung von Legierungen oder von metallischen Mischungen auf der Basis von Uran, dadurch gekennzeichnet, daß eine selektive anodische Reaktion an mindestens einem der Legierungsbestandteile mit Hilfe einer gesteuerten anodischen Spannung in einem flüssigen Fluorbad stattfindet.

2. Verfahren nach Anspruch 1, dadurch gekennzeichnet, daß die selektive Fluorierung auf der Basis von Uran erfolgt.

3. Verfahren nach einem der Ansprüche 1 oder 2, dadurch gekennzeichnet, daß die Legierung in fragmentierter Form verwendet wird.

4. Verfahren nach einem der Ansprüche 1 bis 3, dadurch gekennzeichnet, daß das flüssige Fluorbad Fluorwasserstoffsäure enthält.

5. Verfahren nach Anspruch 4, dadurch gekennzeichnet, daß es sich bei dem Bad um ein KF-2HF- oder NH₄F-3HF-Bad handelt.

6. Verfahren nach einem der Ansprüche 1 bis 4, dadurch gekennzeichnet, daß es in einer Elektrolysezelle durchgeführt wird, die in einer Wanne (1) angebracht ist, die mit einer Vorrichtung (2) ausgestattet ist, die erwärmt und abgekühlt werden kann, um das Bad zu verflüssigen, zu verfestigen und/oder die Temperatur des Bades konstant zu halten, ferner ausgestattet mit einer Metallkathode (7), einem Anodenkorb (11), der die zu behandelnde Legierung (21) und eine Anodenstromzuführung enthält, einem Diaphragma (5), das den anodische Teil vom kathodischen Teil abtrennt, einer Kuppel (19) zur Rückgewinnung von flüchtigen Fluoriden, die im Verlaufe der selektiven Fluorierung entstehen, sowie gegebenenfalls einem Wasserstoffkollektor (6).

7. Verfahren nach Anspruch 6, dadurch gekennzeichnet, daß die Wanne als Kathode dient.

8. Verfahren nach einem der Ansprüche 6 oder 7, dadurch gekennzeichnet, daß der Anodenkorb als Diaphragma dient.

9. Verfahren nach einem der Ansprüche 6 bis 8, dadurch gekennzeichnet, daß die Anodenstromzuführung den genannten Strom von unten zuleitet.

10. Verfahren nach einem der Ansprüche 6 bis 9, dadurch gekennzeichnet, daß die Wanne einen Deckel (9) umfaßt, der den Anodenkorb (11), die Rückgewinnungskuppel (19) sowie gegebenenfalls die Kathode (7) und den Wasserstoffkollektor (6) abstützt.

11. Verfahren nach einem der Ansprüche 6 bis 10, dadurch gekennzeichnet, daß die Wanne aus Mantelstahl, Monelstahl, Nickel oder (vorzugsweise verstärktem) Kunststoff besteht.

12. Verfahren nach einem der Ansprüche 6 bis 11, dadurch gekennzeichnet, daß der Anodenkorb aus Monelstahl besteht, der an der Innenseite mit Kunststoff, Kohlenstoff, (vorzugsweise verstärkten) Kohlenstoffasern oder Polyfluorethylen- bzw. Perfluorkunststoff verkleidet ist.

13. Verfahren nach einem der Ansprüche 1 bis 12, dadurch gekennzeichnet, daß die Spannung der Legierung, des Anodenkorbs und der Wanne unabhängig voneinander gesteuert werden, und daß der Anodenkorb im Verhältnis zur Legierung vorzugsweise kathodisch polarisiert wird und aus Metall besteht, das an der Innenseite mit Kunststoff beschichtetet ist.
